# EUROPEAN PATENT APPLICATION

(11) **EP 4 345 763 A1**
(43) Date of publication of application: **03.04.2024**
(21) Application number: 22199206.8
(22) Date of filing: 30.09.2022
(51) Int. Cl.: G06V 10/14, H04N 23/50, H04N 23/60, G06T 7/00

(54) **SYSTEM AND METHOD FOR IMAGING OF AN OBJECT**

(71) Applicant: Siemens Aktiengesellschaft, 80333 München (DE)
(72) Inventor: Engel, Thomas, 73432 Aalen (DE)
(74) Representative: Siemens Patent Attorneys

(57) **Abstract**

The invention relates to imaging of an object to determine a feature FEAT of the object, e.g. an irregularity or edge. The system comprises a DVS camera with a sensor chip with a plurality of sensor elements. The camera is configured to generate for each sensor element individually an event signal in case a light flux onto the respective sensor element changes by more than a threshold. An optics section of the camera is configured and arranged to convert a light flux from the object into an overall projection of the object onto the sensor chip including a projection PFEAT of the feature FEAT. The system furthermore comprises a beam shifting device operable to laterally shift the projection PFEAT across the sensor chip. The shifting of PFEAT achieves flux changes onto the sensor elements. Evaluation of corresponding event signals allows to derive the aspired properties of the feature FEAT.

## Description

The invention relates to imaging of an object to determine a feature FEAT of the object, e.g. an irregularity or edge. Therein, "determination" might mean the detection of the presence of such a feature or, in a more sophisticated embodiment, the determination of the feature's dimensions, e.g. extensions in an x- and y-direction.

Optical inspection e.g. in mass production suffers the problem of a huge amount of data being created when objects shall be inspected at their velocity of transport in the production with high lateral resolution, i.e. in the direction of the transport as well as perpendicular to the transport direction. Typical data rates caused by corresponding camera systems might nowadays be in the range above 1 or even 5 Gbit/s and future applications might require even higher rates. This amount of data needs to be transmitted and pre-evaluated in a smart camera or an edge device in order to make the data stream to an end device like a superordinated production control system manageable. Lower data rates would result in less resolution and, therewith, lower inspection accuracy which would in the end have a negative impact on the quality of the production process.

State of the art inspection systems capture the image data in high volume with a suitable camera and transmit captured data to an edge device which performs data pre-evaluation or even full evaluation. In alternative solutions, the data is transmitted to a cloud system for analysis. In some cases, smart cameras are used where CPUs or FPGAs are incorporated in order to identify defects at an early stage of the process and to crop a relevant area of interest in the images or to aggregate the data e.g. by packaging etc. In many applications line-scan cameras are in use in order to have a more constant data rate than with full field cameras, but the general topic of the high data volume stays exactly the same for the same resolution.

Thus, the market does not have a suitable concept in place which reduces the data stream on the one side and, on the other side, still covers a large dynamic range of e.g. 80 to 100dB or even higher in applications of inspecting objects in scenarios in which the object to be inspected and the inspecting camera system are moving relative to each other. The high dynamic range is necessary to cover different illumination conditions in the field of view of the camera and to maintain good imaging properties to ensure the high inspection accuracy and quality. Typical full field or line cameras only have 40 to 60dB of maximal dynamic range. An improved approach for object inspection based on integration of so called "event" or "DVS" cameras is introduced in PCT/EP2022/070785.

Another application in optical inspection tasks is based on three dimensional (3D) measurements of an object, including depth information of the object representing the third dimension. Such 3D measurements, which can be performed with a single camera from a fixed viewing direction, can be useful for measuring 3D shapes of objects in various applications like computer vision and robotics wherein speed and versatility are key elements for measurements in the context of tasks like inspection and detection. 3D measurements of a scene typically apply any kind of stereoscopic imaging principle. One known stereoscopic imaging principle involves two cameras looking at the scene from different viewing directions, wherein the two cameras can be either two physical cameras at different poses imaging at the same time or one camera positioned at different poses at different instants of time. However, the principle is less suited for moving objects. Another approach applies an active triangulation system with one camera and a structured illumination onto the scene instead of using two cameras. The system takes a series of images with different illumination patterns in order to evaluate the depth information from the stack of images. Another way to capture depth information is to use image stacks created by one camera or imaging system by taking images at different nominal focus positions and by evaluating the intensity variation for each pixel or binned region in the image for maximum or minimum intensity reading depending on momentary defocus. The extremal intensity may be assigned to the physical position of the real object surface point in 3D space. Taking focus series takes quite some time, since the number of images in the stack depends on spatial separation and depth range to be covered. Therefore, this principle is also less suited for moving objects due to its high time requirements. Additionally, the measurement generates a relatively high amount of data to be processed. Other 3D measuring principles like chromatic (confocal) sensing or laser triangulation probes suffer from the fact that they are not capable to capture an object height info for an area of interest in parallel. Scanning in one or even two directions would be required which makes these technologies less suited for many applications. An improved approach for 3D object inspection again based on integration of "event" or "DVS" cameras is introduced in PCT/EP2022/074649.

Therefore, a solution is required which allows fast and precise determination of a feature FEAT of an object. This is solved by the method suggested in claim 1 and by the system as per claim 13. Dependent claims introduce advantageous embodiments.

A method METH for camera based imaging of an object for observing properties, e.g. spatial properties, of a physical feature FEAT of the object, e.g. an irregularity or edges, contour lines or any other kind of physical feature which would typically create a contrast in an optical image, advantageously applies a DVS camera. The DVS camera comprises a light sensitive sensor chip with a plurality of sensor elements SE(i). The camera is configured to generate for each sensor element SE(i) individually imaging data DAT(i) including an event signal SIG(i) from a predefined group GRP of event signal types in case a light flux FX onto the respective sensor element SE(i) changes by more than a given threshold THRES, wherein the group GRP of event signal types includes a positive event signal POS and a negative event signal NEG. The object to be imaged is positioned in a field of view FOV of the DVS camera (110) which extends from the camera (110) in a z-direction such that an overall projection P200 of the object, which includes a projection PFEAT of the feature FEAT, falls onto the sensor chip of the DVS camera. The method METH comprises a stage INSPECT of observing the object with the DVS camera to generate imaging data DAT(i) representing the feature FEAT, wherein a relative lateral shifting of the projection PFEAT of the feature FEAT and the sensor chip is executed during the stage INSPECT by means of a beam shifting device. This lateral shifting of the projection PFEAT on the sensor chip produces changes of flux onto individual sensor elements so that these concerned sensor elements generate event signal which can be evaluated to determine the feature FEAT and its properties.

The relative shifting might be achieved by shifting the projection PFEAT itself or by shifting the sensor chip or by a combination of both, as described below.

The lateral shifting can be executed such that the projection PFEAT, i.e. each arbitrary point of the projection PFEAT, moves across the sensor chip along a rectangular, preferably quadratic, path or along an ellipsoid, preferably circular, path. The availability and knowledge of such a well defined path helps to reconstruct the feature FEAT from the imaging data DAT(i).

The lateral shifting can be embodied as a sequence SEQ of one or more subsequent shifting steps SHS(j) with j=1,...,J and J≥1 representing the number of shifting steps SHS(j) of the sequence SEQ, wherein each one of the shifting steps SHS(j) is characterized by a given shifting amount and a given shifting direction. For example, different shifting steps SHS(j1), SHS(j2) with j1≠j2 might have different shifting directions and/or shifting amounts of different shifting steps might be identical or different to each other, depending on which kind of path of the projection PFEAT across the sensor chip is aspired. Applying the sequence of shifting steps can be performed such that a continuous lateral shifting results.

In one approach, the lateral shifting of the projection PFEAT of feature FEAT across the sensor chip can be performed by lateral shifting of the sensor chip relative to a light flux field emitted by the object towards the DVS camera. Thus, the beam shifting device affects the sensor chip, either directly or by shifting the whole camera. I.e. the sensor chip itself is moved laterally relative to the light flux field while the lateral position of the light flux field might, but doesn't have to, remain constant.

Herein and in the following, the expression that an object "emits" a light flux or similar essentially means that the respective light flux is originating or comes from that object due to any kind of effect, i.e. the light flux might be generated by reflection or transmission of light generated by a light source. However, in principle, it might also include that the object actively sends out a light flux.

In another, additional or alternative approach, the lateral shifting of the projection PFEAT of feature FEAT across the sensor chip can be performed by lateral shifting the light flux field LFL, which is emitted by the object towards the DVS camera, relative to the sensor chip with the help of the beam shifting device. Thus, the beam shifting device affects the light flux field. The sensor chip remains at rest in the camera while the lateral position of the light flux field is varied laterally relative to the sensor chip.

The DVS camera might comprise an optics section for generating the projection P200 of the object from the light flux field LFL emitted by the object, i.e. the emitted light flux field LFL enters the optics section, travels through the optics section, and leaves the optics section again towards the sensor chip, wherein the projection P200 is formed by the one or typically more optical devices of the optics section. Of course, the light leaving the optics section is still has the character of a light flux field and it might be denoted a "projected" light flux field. The lateral shifting can then be performed by the beam shifting device after the light flux field has entered the optics section and especially after the light flux field has left the optics section towards the sensor chip, i.e. the shifting of the light flux field happens in the optics section or between the optics section and the sensor chip.

The optics section might comprise one or more integrated optical devices for generating the projection P200 of the object from the light flux field LFL emitted by the object, wherein the beam shifting device is realized in a first realization form by at least one of the optical devices of the optics section, which includes that the beam shifting devices is realized by the optics section as a whole. The lateral shifting is achieved by changing the optical properties of the at least one optical device, preferably by shifting, tilting, and/or deforming the at least one optical device.

In a second realization form of the beam shifting device, the beam shifting device can be embodied as a transparent, plano-parallel plate which has a given refractive index, which has at least two parallel surfaces. The plate can be positioned in a z-direction between the object and the camera's sensor chip, the plane of which defines the x-direction and the y-direction, so that the light flux field emitted by the object in the z-direction passes through the parallel surfaces and through the inner of the plate to reach the sensor chip, i.e. through a first one of the surfaces, then through the inner part, and then through the other one of the surfaces. The lateral shifting can be achieved by tilting the plate around an axis extending in the x-direction and/or around an axis extending in the y-direction, wherein the tilting allows influencing the angle ALPHA under which the light flux field LFL falls onto the surfaces and, therewith, the amount of lateral shifting.

In a third realization form of the beam shifting device, the beam shifting device can be embodied as a pair of mirrors which are arranged parallel to each other and, in a default position, under an angle of 45° with regard to the z-direction, such that the light flux field emitted by the object is reflected by a first one of the mirrors to the second one of the mirrors and from the second one of the mirrors towards the sensor chip. The lateral shifting can be achieved by tilting both mirrors by equal angels ALPHA around an axis extending in the x-direction and/or around an axis extending in the y-direction relative to the default position, wherein the tilting allows influencing the angle under which the light flux field LFL falls onto the mirrors and, therewith, the amount of lateral shifting.

In a fourth realization form of the beam shifting device, the beam shifting device can be embodied as an electro-optical device which has a plate with at least two surfaces and which is positioned in a z-direction between the object and the sensor chip, so that the light flux field emitted by the object in the z-direction passes through the surfaces and through the inner of the plate, i.e. though a first one of the surfaces, then through the inner part, and then through the other one of the surfaces, to reach the sensor chip. The lateral shifting can be achieved by applying a voltage at preferably transparent electrodes arranged at the surfaces.

The method METH might comprise, besides the stage INSPECT, a stage EVAL of evaluating the generated imaging data DAT(i), wherein the properties of the physical feature FEAT, e.g. its extension and dimension, respectively, in x-direction and y-direction, of the object are derived from the generated imaging data DAT(i). The imaging data DAT(i) include the event signal SIG(i) itself, an accurate time stamp TS(i) representing the point TS(i) in time at which an event signal SIG(i) is generated for a particular sensor element SE(i), and an unambiguous identifier ID(i) of the particular event signal SIG(i) generating sensor element SE(i) representing a position of the particular event signal SIG(i) on the sensor chip. In the stage EVAL, for at least one of the points TS(i) in time, positions POS(i) of those sensor elements SE(i), for which event signals SIG(i) are generated at the respective point TS(i) in time, are processed in combination with the event signal types of the respective event signals SIG(i), i.e. "positive" POS or "negative" NEG, to determine the spatial properties of the feature FEAT.

The imaging data DAT(i) might furthermore comprise a measure INT(i) representing a momentary light intensity of the light flux field LFL onto the respective sensor element SE(i), wherein, preferably, such measure INT(i) is only determined in case an event signal SIG(i) is generated for the particular sensor element SE(i). In case a time series with a plurality of subsequent event signals SIG(i1) and, correspondingly, imaging data DAT(i1) appears for a particular sensor element SE(i1), such time series is evaluated by determining the time development INT(i1)(TS(i1)) of the measures INT(i1) of the imaging data DAT(i1) of the time series based on the time stamps TS(i1) of the imaging data DAT(i1). The determined time development INT(i1)(TS(i1)) represents a profile PROF of the projection PFEAT. A physical form of a feature FEAT can then be reproduced with high spatial resolution from the profile INT(i1)(TS(i1)), preferably based on optical imaging properties of the inspection system.

Preferably, the time development INT(i1)(TS(i1)), which consists of a plurality of data points [INT(i1), TS(i1)] according to the plurality of generated event signals SIG(i1), is interpolated to form the profile PROF from which the physical form of a feature FEAT is reproduced. The interpolation allows sub-pixel resolution in the approach to determine the physical form.

A system for camera based imaging of the object for observing the properties of the object's physical feature FEAT introduced above, comprising the camera as well as a control system configured to execute the method introduced above. The camera is a DVS camera with a light sensitive sensor chip with a plurality of sensor elements SE(i) and it is configured to generate for each sensor element SE(i) individually imaging data DAT(i) including an event signal SIG(i) from a group GRP of event signal types in case a light flux FX onto the respective sensor element SE(i) changes by more than a given threshold THRES. The optics section of the DVS camera, which can be, in the simplest embodiment, an opening in a body of the DVS camera, is configured and arranged to generate an overall projection P200 of the object onto the sensor chip from a light flux field LFL emitted by the object, wherein the overall projection P200 includes a projection PFEAT of the feature FEAT. The system furthermore comprises a beam shifting device configured and operable to laterally shift the projection PFEAT of the feature FEAT across the sensor chip by a predetermined amount DS.

The beam shifting device can be realized as introduced above, i.e. in any one of the first realization form with the integrated optical devices, second realization form with the transparent, plano-parallel plate, third realization form with the pair of mirrors, or fourth realization form with the electro-optical device. In principle, it is imaginable that the system comprises more than one beam shifting devices, wherein different beam shifting devices might be, but don't have to be, realized in different realization forms.

The beam shifting device can be placed in a first position POS1, such that it is located between the optics section and the sensor chip of the DVS camera, or in a second position POS2, such that the optics section of the DVS camera is located between the beam shifting device and the sensor chip, or in a third position POS3, such that it is placed within the optics section, i.e. integrated into the optics section, at a suitable position between the optics section's components and individual optical devices, respectively.

In case the beam shifting device is placed in the third position POS3, the integrated optical devices of the optics section might be arranged and controllable such that they form the beam shifting device. Therein, "integrated" devices include only such devices which are anyway required to fulfill the pure function of the original optics section alone. I.e. the beam shifting device is realized by the optical devices of optics section themselves, i.e. the optics sections' lenses, apertures, etc. are used to achieve the lateral shift and a separate beam shifting device would not be required. The lateral shifting might be achieved by shifting, tilting, and/or deforming the optical devices.

In case the beam shifting device is placed in the first position POS1 and assuming that the DVS camera comprises a body, the sensor chip and the beam shifting device can be placed within the body of the DVS camera.

Thus, the special properties of a DVS camera as introduced below are beneficially applied to determine a physical feature FEAT of the object.

The invention advantageously implements a camera applying the "Dynamic Vision System" (DVS) principle. Typically, such a DVS camera, also known as "event camera" or "neuromorphic camera", is a full field camera with a sensor chip of aspect ratio 4:3 or 16:9 or the like, currently being available in versions with >10⁶ individual sensor elements (e.g. Prophesee's "Metavision" sensor). The essential properties of a DVS camera applied in the solution described herein include that the DVS camera detects events, i.e. changes of light flux FX or intensity, respectively, exceeding a pre-defined threshold value THRES of e.g. 15%, and that the light flux FX is detected pixelwise with a given threshold THRES, so that in effect the DVS camera has an effective dynamic range of 120db or even higher, as a result of the sensor elements' full well capacity and adoptions of exposure time according to the minimum and maximum allowable values. The high dynamics of signals for an event on a sensor element being significantly faster than a typical camera frame readout time and the high dynamic range of the camera and/or sensing principle are core aspects of the favorable solution provided herein. The signal rate of events can be in the range down to single microseconds while typical frame rates of Mpxl cameras are nowadays in the range of 10 to 5ms for 100 or 200Hz frame rates, respectively. Thus, the speed of the measuring system is increased by 3 to 4 orders of magnitude with respect to today's technology.

In summary, major differences of the DVS camera based approach for object inspection over conventional inspection systems are based on the properties of a DVS camera as described below to detect events instead of full frame imaging, on the significantly higher speed for DVS camera data acquisition compared to typical frame rates of full frame cameras, and on the significant reduction in data volume, since only relevant events get reported instead of a full image capture of the total surface of the object under inspection.

It is to be understood that the elements and features recited in the appended claims may be combined in different ways to produce new claims that likewise fall within the scope of the present invention. Thus, whereas the dependent claims appended below depend from specific independent or dependent claims, it is to be understood that these dependent claims can, alternatively, be made to depend in the alternative from any preceding or following claim, whether independent or dependent, and that such new combinations are to be understood as forming a part of the present specification.

### DESCRIPTION OF THE FIGURES

In the following, possible embodiments of the different aspects of the present invention are described in more detail with reference to the enclosed figures. The objects as well as further advantages of the present embodiments will become more apparent and readily appreciated from the following description of the preferred embodiments, taken in conjunction with the accompanying figure in which:
- FIG 1: shows a first scenario of an inspection system,
- FIG 2: shows a second scenario of the inspection system,
- FIG 3: shows the method METH for object observation,
- FIG 4: shows a top view onto a sensor chip,
- FIG 5: shows a first embodiment of a beam shifting device,
- FIG 6: shows a second embodiment of a beam shifting device,
- FIG 7: shows a third embodiment of a beam shifting device,
- FIG 8: shows options to position the beam shifting device in the inspection system,
- FIG 9: shows a DVS camera,
- FIG 10: shows a first example of the working principle for feature determination,
- FIG 11: shows a second example of the working principle for feature determination, and
- FIG 12: shows an exemplary intensity distribution.

### DETAILED DESCRIPTION

It might be mentioned that dimensions and proportions in the figures are typically not true to scale but exaggregated in order to clarify procedures and effects.

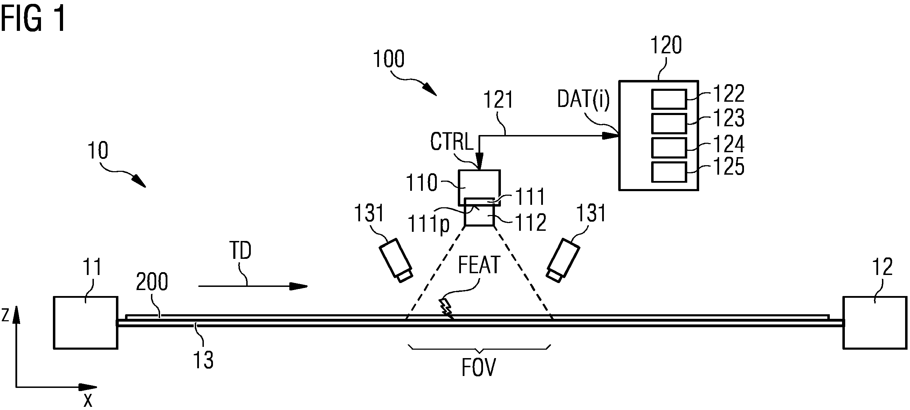

FIG 1 shows an arrangement of an inspection system 100 for camera-based inspection of the object 200 as well as the object 200 to be scanned and inspected, respectively, by the inspection system 100. The inspection system 100 comprises a DVS camera 110 and a control system 120, wherein the DVS camera 110 is configured and arranged such that it captures a field of view FOV positioned in a z-direction in front of the DVS camera 110. The object 200 to be imaged is arranged at least in parts in the field of view FOV of the DVS camera 110. Thus, a light flux field LFL from the object 200 to the camera 110 falls onto an optics section 112 of the DVS camera 110 which is arranged and configured such that the light flux field LFL representing the object 200 is converted into a projection P200 of the object 200 onto a light sensitive sensor chip 111 of the camera 110. The light flux field LFL might be caused by illuminating the object 200 with an illumination system. Different methods of illuminating the object 200 might be applied, e.g. a bright field transmissive light illumination, a combination of transmissive and reflective light, and/or reflective light. For some inspection tasks, even dark field kinds of illumination in the reflective or transmissive regime can be employed as well. In any case and even without a dedicated illumination system, it can be assumed that a light flux field LFL from the object 200 reaches the DVS camera 110 so that the object's 200 projection P200 falls onto the sensor chip 111.

In an exemplary first application scenario, the object 200 might be the outcome of a production process in a production facility 10, e.g. like in PCT/EP2022/070785. FIG 1 shows a side view on such an exemplary production facility 10 for production of the object 200. For example, the object 200 might be a batch of a plurality of mass production components, e.g. any kind of component like solid parts made from metal or plastic, machined, printed, injection molded etc. or even soft materials like sheets of tissue, paper, fabric or food like any product from cheese, meat, sausages, cookies, bread, tofu and also agricultural goods like eggs, plants, fish etc. Also, the object 200 might be an extensive product like a sheet metal or a fabric. The produced object 200 might be transported, for example with a conveyor belt 13 of the facility 10, in a transportation direction TD from a first station 11 of the production facility 10 to a second station 12. The stations 11, 12 might be machines or other components of the production facility 10 for implementing a production process applied in the production facility 10 to produce the object 200.

In the first scenario, the DVS camera 110 of the inspection system 100 is installed in between the stations 11, 12 and the inspection system 100 is configured to detect features FEAT of the object 200, e.g. irregularities like defects or any production errors, while the object 200 moves along and relative to, respectively, the DVS camera 110. The DVS camera 110 is configured and arranged such that it captures the field of view FOV and such that the field of view FOV covers a section of the surface of the object 200. Since the object 200 moves relative to the DVS camera 110, different sections of the object's 200 surface are captured at different points t(i) in time.

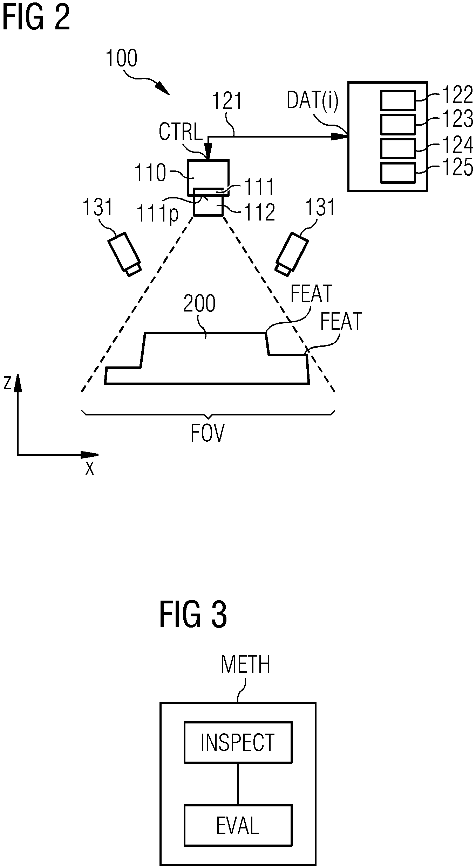

In an alternative second application scenario, comparable to the scenario addressed in PCT/EP2022/074649 and indicated in FIG 2, the inspection system 100 is embodied and arranged to inspect an object 200 of interest which is at rest relative to the DVS camera 110. The inspection system 100 might not only be configured to capture 2D data of the object 200, i.e. representing the object's 200 properties in x-y-direction, but also to derive a depth information, i.e. information about the object 200 in the third dimension and in z-direction, respectively. Again, the inspection system 100 is configured to detect features FEAT of the object 200. In the second scenario, the features FEAT might be edges, contour lines, or any other regular property of the object 200, but also, as in the first scenario, irregularities.

In both application scenarios as well as in further imaginable application scenarios of the inspection system 100, the inspection system 100 comprises the control system 120 with a control unit 122, an evaluation unit 123, a memory 124, and one or more processors 125. The control system 120 is connected to the DVS camera 110 via a wired or non-wired connection 121. The processor 125 might be utilized by the control unit 122 and by the evaluation unit 123 to execute a respective software to perform their respective tasks of controlling the camera 110 and evaluating imaging data DAT. The software might be stored in the memory 124.

The control system 120 and its control unit 122, respectively, is configured to control the DVS camera 110 with a control signal CTRL, e.g. with regard to setting of a momentary focal length f(t) or any other parameter of an optics section 112 of the camera 110 and/or of a sensor chip 111 of the camera 110, and to receive imaging data DAT(i) from the DVS camera 110, both via the connection 121. Received imaging data DAT might be stored at least temporarily in the memory 124.

The control system 120 and its evaluation unit 123, respectively, is configured to evaluate the imaging data DAT provided by the DVS camera 110 and potentially stored in the memory 123 to derive aspired information about the object 200 and about its feature FEAT. For example, for the first scenario, the evaluation unit 123 is configured to determine whether an irregularity FEAT is present, while, for the second scenario, the evaluation unit 123 determines 2D or 3D spatial information about the feature FEAT, in each case based on evaluating imaging data DAT provided by the camera 110.

In more general terms, the control system 120 and its evaluation unit 123, respectively, is configured to process imaging data DAT provided by the DVS camera 110 from scanning the object 200 in order to determine parameters of the feature FEAT of the object 200. For that purpose, the evaluation unit 123 applies a method METH shown in FIG 3 including a stage INSPECT of generating imaging data DAT with the DVS camera 110 and a stage EVAL of evaluating the imaging data DAT generated in the stage INSPECT to determine the aspired parameters of the feature FEAT. The method METH might be implemented as a respective software executed by the processor 125 of the control system 120 as indicated above. The stage INSPECT might be controlled by the control unit 122 while the stage EVAL might be performed by the evaluation unit 123.

The DVS camera 110 has a body 113 which might comprise typical electronics including a light sensitive sensor chip 111 as well as an optics section 112. Just as a regular camera lens, the optics section 112 can be a housing with an arrangement of one or more optical devices 112' like lenses, apertures etc. and imaging parameters like magnification and focal length can be set as for a regular camera lens. Thus, it can be assumed that such imaging parameters are well known during operation of the DVS camera 110. Moreover, the optics section 112 is adapted to the dimensions of the sensor chip 111 and, in correspondence with the sensor chip's 111 dimensions, selected such that imaging the object 200 in the field of view FOV results in a projection of the object 200 onto the sensor chip 111.

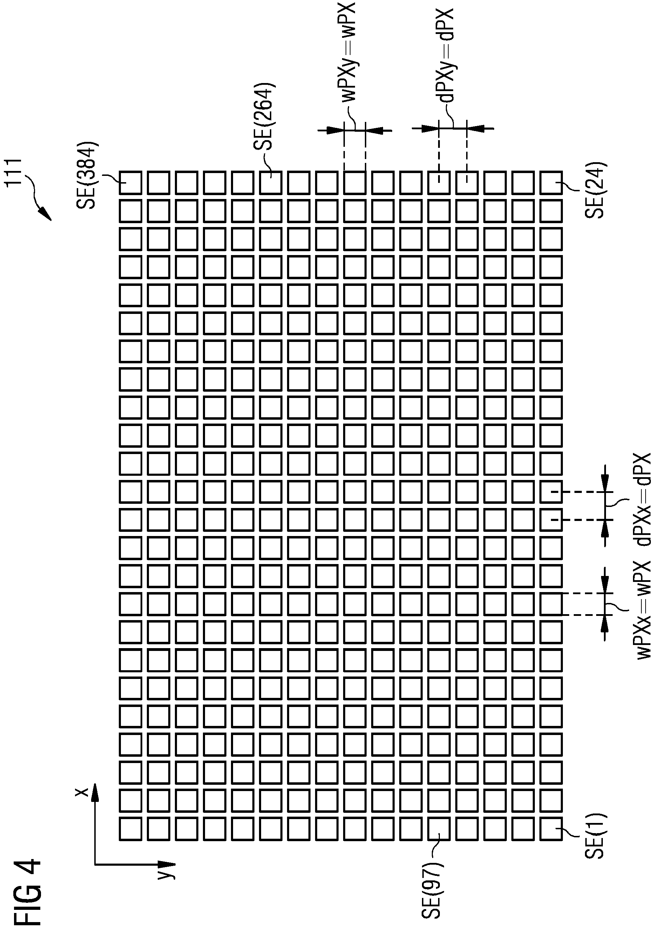

The sensor chip 111 comprises a plurality of light sensitive sensor elements SE(i) with i=1,...,I and I representing the total number of sensor elements SE(i), e.g. I≥10⁶. As a simplified example, a top view of a sensor chip 111 with only 16*24=384 sensor elements SE(i) is shown in FIG 4. Only a few of the sensor elements SE(i) have been marked with reference signs. Preferably, the sensor chip 111 is a rectangular chip 111 with its sensor elements SE(i) arranged in rows and columns perpendicular to each other. The extensions of the planar, essentially two-dimensional sensor chip 111 define a coordinate system x, y, z, wherein the sensor chip's 111 plane defines the x-direction in a first dimension, e.g. along the rows, as well as the y-direction in a second dimension, e.g. along the columns, while the z-direction in the third dimension is perpendicular to the sensor chip's 111 plane and surface 111p, respectively. Individual sensor elements SE(i) have a width wPXx and a height wPXy, wherein width and height are preferably identical, i.e. wPXx=wPXy=wPX. In x-direction, the distance of the centers of neighboring sensor elements SE(i), SE(i+1) amounts to dPXx. The corresponding distance in y-direction is dPXy. Preferably, those distances are identical to each other, i.e. dPXx=dPXy=dPX.

In contrast to regular cameras, a signal SIG(i) generated by a DVS camera 110 for a given sensor element SE(i) at a point t(k) in time does not directly or, for example, proportionally represent the flux or intensity of light onto the respective sensor element SE(i), but it depends on a relationship between a light flux FX onto the sensor element SE(i) at that point t(k) in time and a light flux FX onto the same sensor element SE(i) at an earlier point t(k-1) in time. More concrete, it shows whether a light flux FX at the sensor element SE(i) for a point t(k) in time differs from a light flux FX at the same sensor element SE(i) at an earlier point t(k-1) in time by more than a given threshold THRES. In case such difference DELTAFX is indeed higher than the threshold THRES, a "positive" or a "negative" event is generated for the respective sensor element SE(i).

Thus, the DVS camera 110 is configured to generate for each sensor element SE(i) individually a signal SIG(i), in the following referred to as an "event signal" SIG(i), in case a light intensity or light flux, respectively, onto the respective sensor element SE(i) changes by more than the given threshold THRES, e.g. 15%, while no event signal is generated in case the flux change DELTAFX is less than or equal to the threshold THRES. Therein, the event signals SIG(i) are not assigned free floating values, but each event signal SIG(i) is selected from a predefined group GRP of event signal types, which group GRP can include at least a positive event POS and a negative event NEG. Typically, the group GRP contains only two event types, i.e. "positive event" POS and "negative event" NEG. Thus, an event signal SIG(i), in case generated, can only be a positive event in case the flux FX changes to a higher flux by an amount DELTAFX with DELTAFX>THRES or it can be a negative event in case the flux changes to a lower flux by an amount DELTAFX with DELTAFX>THRES. In case the change DELTAFX of light flux FX onto a sensor element SE(i) is lower than or equal to the threshold THRES, i.e. DELTAFX≤THRES, no event signal SIG(i) at all is generated for the respective sensor element SE(i), i.e. not even SIG(i)=0. Thus, event signals SIG(i) are only generated in case of significant flux changes, i.e. DELTAFX>THRES.

More concrete, considering a specific sensor element SE(i) of the sensor chip 111 of the DVS camera 110: In case the momentary flux FX(t(k)) onto the sensor element SE(i) is higher than the earlier flux FX(t(k-1)) onto the same sensor element SE(i) by more than THRES, i.e. FX(t(k))-FX(t(k-1)>THRES, the event signal SIG(i) generated for the specific sensor element SE(i) is a positive event. In case the momentary flux FX(t(k)) onto the sensor element SE(i) is lower than the earlier flux FX(t(k-1)) onto the same sensor element SE(i) by more than THRES, i.e. FX(t(k-1))-FX(t(k)>THRES, the event signal SIG(i) generated for the specific sensor element SE(i) is a negative event. In all other cases, in which the amount |FX(t(k))-FX(t(k-1))| of the difference between the fluxes FX(t(k)), FX(t(k-1)) is less than THRES, i.e. |FX(t(k))-FX(t(k-1)|≤THRES, no signal at all is generated for the respective sensor element SE(i).

Any event signals SIG(i) generated by the sensor elements SE(i) during the stage INSPECT, i.e. either positive POS or negative events NEG, are transferred as part of the imaging data DAT(i) to the control system 120 for further processing in the stage EVAL in the evaluation unit 123. Imaging data DAT(i) transferred from the DVS camera 110 to the control system 120 for further processing include the event signal SIG(i) itself, an accurate time stamp TS(i) which stands for the point in time at which the sensor element SE(i) generated the event signal SIG(i), and an unambiguous identifier ID(i) of the respective individual event signal SIG(i) generating sensor element SE(i) to ensure that the position POS(i) of such event signal SIG(i) generating sensor element SE(i) on the sensor chip 111 is known. The position POS(i), which can be derived from the identifier ID(i), is required in case a lateral position xf, yf of the feature FEAT shall be determined.

The functional principle of the DVS camera 110 necessitates changes of the intensity or light flux FX of the object 200 projection onto the sensor chip 111 and its sensor elements SE(i). Such a change in flux FX onto the sensor chip 111 can be caused by different incidents. PCT/EP2022/070785 assumes that the object 200 is moving relative to the camera 110 so that projections PFEAT of features FEAT of the object 200 travel across the surface 111p of the sensor chip 111, resulting in flux changes DELTAFX. PCT/EP2022/074649 describes a change of momentary focal length f(t) of the optics section 112 which effects a more or less blurred projection PFEAT of feature FEAT of the object 200 on the sensor chip 111, resulting in a change DELTAFX of flux FX. In both cases, event signals SIG(i) can be generated for concerned signal elements SE(i) .

However, in case of inspection tasks without such moving objects 200 and/or changes of focal length, flux change has to be introduced by other means and preferably in a reproducible way, i.e. in a predefined, well known manner. For that purpose, the invention disclosed herein applies a beam shifting device 150 which is configured to laterally shift the light flux field LFL, which is emitted by the object 200 towards the DVS camera 110, such that the projection P200 of the object 200 onto the sensor chip 111 is shifted by a shifting amount DS. Correspondingly, the projection PFEAT of a feature FEAT is also shifted since such feature projection PFEAT is simply a part of the overall object projection P200. Thus, shifting the light flux field LFL results in shifting both the overall projection P200 of the object 200 and the projection PFEAT of feature FEAT by an amount DS.

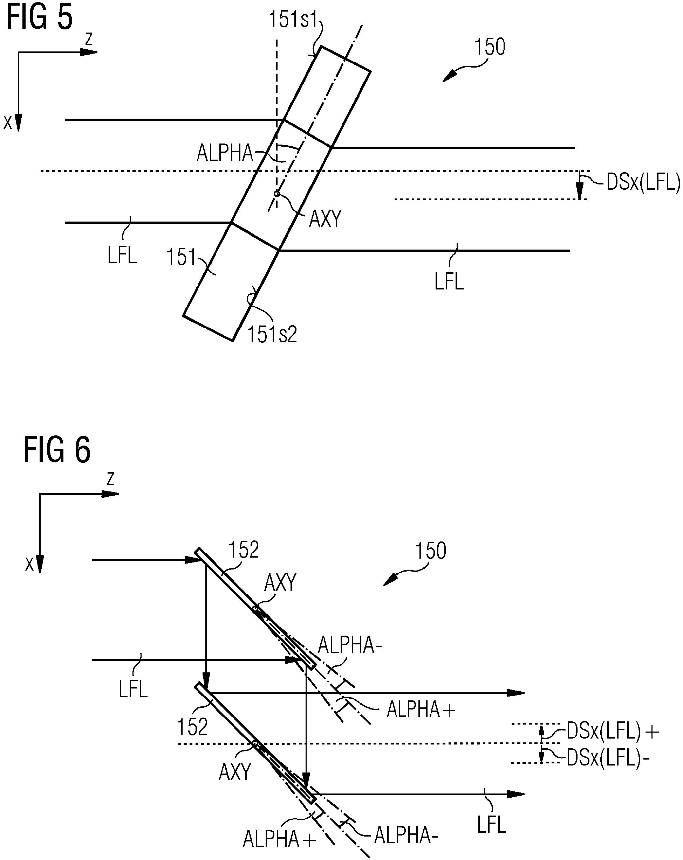

In a first embodiment, the beam shifting device 150 can be realized as a deflector, the working principle of which is based on tilting a plano-parallel, transparent plate 151, for example made of crystal, glass, or suitable plastic, by an arbitrary angle ALPHA. This is shown in FIG 5 for achieving a lateral shift DSx(LFL) of the light flux field LFL in x-direction. For that purpose, the plate 151 is tilted around an axis AXY extending in the y-direction such that the light flux field LFL falls onto a first surface 151s1 of the plate 151 under the angle ALPHA, then passes the plate 151 and leaves the plate 151 through its second surface 151s2. Refraction of the light flux field LFL at the surfaces 151s1, 151s2 depending on the angle ALPHA and furthermore depending on the plate's 151 refractive index results in the lateral shift DSx(LFL) of the light flux field which can be easily calculated and set in case the refractive index and dimensions of the plate 151 as well as ALPHA are known. Correspondingly, but not shown, tilting the plate 151 around an axis extending in x-direction would achieve a lateral shift DSy(LFL) of the light flux field LFL in y-direction. The plate 151 is preferably tiltable around both axis AXX and AXY so that lateral shifts DSx(LFL), DSy(LFL) of the light flux field are possible in both directions x, y (in case the lateral shift of the light flux field LFL is addressed in the following in a general manner but not depending on its direction, the parameter DS(LFL) will be used). The mechanism of the beam shifting device 150 for tilting the plate 151 around the x-axis and/or the y-axis is not shown in FIG 5. However, the beam shifting device 150 in the first embodiment might be realized like Optotune's extended pixel resolution actuator "XPR^{®}-20" or "XPR^{®}-33".

In a second embodiment, the beam shifting device 150 can be realized by an arrangement of a plurality, preferably a pair, of light reflecting mirrors 152. FIG 6 shows one realization of this embodiment which includes two mirrors 152 each of which is preferably arranged in a default position under an angle of 45° to the z-direction and direction of propagation of the light flux field LFL, respectively. Lateral shifting of the light flux field in x-direction is achieved by tilting both mirrors 152 around axis AXY by angles ALPHA+ and ALPHA-. Therein, best results are achieved when both mirrors 152 are tilted by exactly the same angle. For the sake of clarity, FIG 6 indicates the resulting shifting amounts DSx(LFL)+, DSx(LFL)- only with reference to the light flux field's LFL central beam, wherein DSx(LFL)+ results from tilting angle ALPHA+ and DSx(LFL)- results from tilting angle ALPHA-.

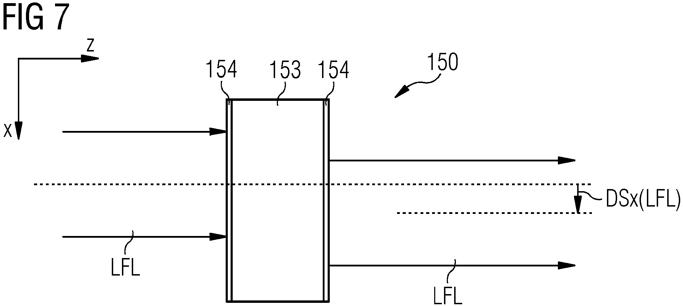

In a third embodiment, schematically shown in FIG 7, the beam shifting device 150 can be realized as an electro-optical device 153, preferably without moving mechanical parts.

For example, such an electro-optical device 153 can be a uniaxial or biaxial optical crystal which is cut with suitable orientation to form a plate. Due to the electro-optical effect, application of an electrical field and voltage, respectively, results in a change of the refractive index for at least one polarization direction of incident light, i.e. the light flux field LFL. Variation of the refractive index can be used to achieve the lateral shifting of the light flux field LFL by an amount DSx(LFL). Advantageously, the shifting can be applied very fast since it is only based on the application or change, respectively, of the aspired electrical field. For example, the cut for forming the crystal is performed such that the voltage can be applied along the path of the light flux field LFL through the plate 153. The electrodes 154 for establishing the voltage can be embodied as transparent electrodes 154, e.g. made from ITO (Indium-Tin-Oxide), which can be applied as planar electrodes 154 on the surfaces of the plate 153.

In another example, the electro-optical device 153 can utilize oriented liquid crystals, arranged between plano-parallel surfaces of the device 153. The plates comprise or are embodied as transparent electrodes 154 which are used again to generate an electrical field which extends through the liquid crystal. The electrical field allows to influence and adjust the orientation of the liquid crystals, again resulting in a respective change of the refractive index and again allowing specific lateral shifting of the light flux field LFL.

Additionally, the electro-optical device 153 might be tilted around an axis extending perpendicular to the beam direction of the light flux field, i.e. the z-direction.

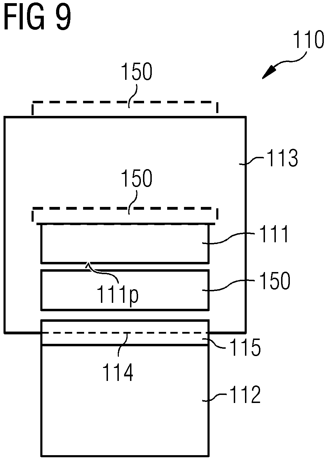

In a further approach, indicated by dotted lines in FIG 9, the beam shifting device 150 might be embodied and arranged such that it does not affect the light flux field LFL, but the sensor chip 111. I.e. the beam shifting device 150 moves the sensor chip 111 within the camera 110 or it moves the whole camera 110 including the sensor chip 111. In this approach, the beam shifting device 150 would be a device with an essentially or purely mechanical working principle, for example according to a vibration plate or similar.

In any case, operation of the beam shifting device 150 achieves a relative lateral shifting of the projection PFEAT of the feature FEAT and the sensor chip 111. For example, shifting amounts DS might be such that the projection PFEAT moves across a couple of sensor elements SE, e.g. DS=m*dPX with, for example, m∈{1,...,10}.

Independent from the concrete embodiment of the beam shifting device 150, the control unit 122 of the control system 120 of the inspection system 100 might be connected to the beam shifting device 150 to control the beam shifting device 150 such that the aspired lateral shift DSx(LFL) and/or DSy(LFL) is achieved.

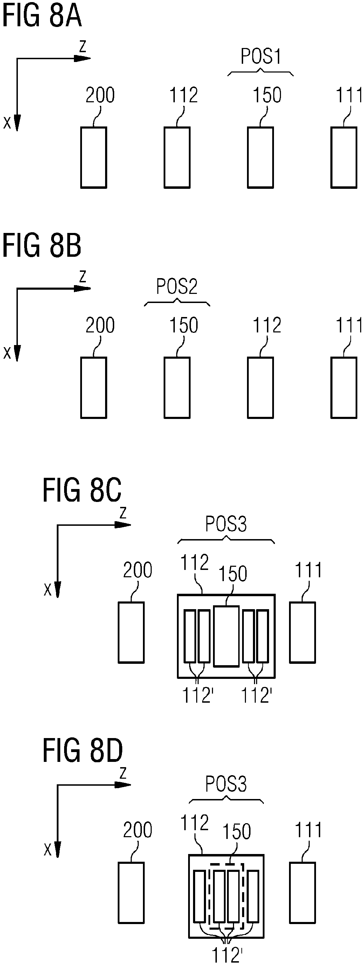

Again independent from the concrete embodiment of the beam shifting device 150, FIGs 7a-7d show in a schematic illustration three options to position and to integrate the beam shifting device 150 in the inspection system 100. In a first, preferred position POS1 shown in FIG 8a, the beam shifting device 150 is placed between the optics section 112 and the sensor chip 111 of the DVS camera 110. In a second position POS2 shown in FIG 8b, the beam shifting device 150 is placed between the object 200 and the optics section 112 of the DVS camera 110. In a third position POS3 shown in FIG 8c, the beam shifting device 150 is placed within the optics section 112, i.e. integrated into the optics section 112, at a suitable position between the optics section's 112 components 112' and individual optical devices 112', respectively. In the third position POS3, the beam shifting device 150 might be realized by the optical devices 112' of optics section 112 themselves as indicated in FIG 8d, i.e. the optics sections' 112 lenses, apertures, etc. 112' can be used to achieve the lateral shift and a separate beam shifting device would not be required. In that case the lateral shift can be achieved by suitable tilting, shifting, and/or deforming of the components 112' in any required direction. This includes that the whole optics section 112, but not only the individual components 112', is tilted, shifted, and/or deformed to laterally shift the light flux field LFL. In other words, the optics section 112 itself forms the beam shifting device 150.

Preferably, components of the inspection system 100 are positioned such that disturbances by ambient light are minimized, i.e. sensitive components might be contained in an opaque box or similar.

The beam shifting device 150 might even be integrated into the body 113 of the DVS camera 110 as illustrated in FIG 9. The latter might be a preferable solution since the amount DS of lateral shift can be adapted to the resolution of the sensor chip 111 which is also integrated in the body 113. In that case, the DVS camera 110 might have an opening 114 through which light from the optics section 112 can reach into the body 113 and to the sensor chip 111. For example, the optics section 112 might be connected to the body 113 at the opening 114 using a C-mount or F-mount connector 115. The beam shifting device 150 is then located in the body 113 between the opening 114 and the sensor chip 111.

The achievable shifting amount DS of the projection 200 relative to the sensor chip 111 depends on several parameters. At first, it depends on the position of the beam shifting device 150 in the beam path between the object 200 and the sensor chip 111 and on the momentary imaging parameters of the optics section 112. These parameters can be assumed to be well known for a concrete setup of the inspection system 100. Moreover, it depends on the momentary setting of the beam shifting device 150, i.e. it depends on the lateral shift DS(LFL) of the light flux field LFL momentarily effected by the beam shifting device 150. This can also be assumed to be well known. Knowledge of such parameters allows to determine and especially to arbitrarily set the momentary shifting amount DS of the projection P200 with the help of the control unit 122.

Preferably, the beam shifting device 150 is controlled such that the lateral shift DS of the projection P200 is not less than the distances dPX between the centers of two neighboring sensor elements SE(i), SE(i+1). This ensures that the projection PFEAT of feature FEAT indeed moves from one sensor element SE(i) to another one SE(i+1) so that it can be detected as described below. Especially, a lateral shift DS amounting to two or more distances dPX, i.e. DS≥2*dPX, would be even more preferable because this ensures that features FEAT with less sharp projections PFEAT and less contrast can be detected as well.

In a concrete setup, the optics section 112, the sensor chip 111, and the beam shifting device 150 are adapted to each other such that RES=0.5*(LAMBDA/NUM)=2*PXP is applicable with RES being the chip's lateral resolution, LAMBDA being the shortest or, as an alternative, medium wavelength of the light flux field LFL, NUM being the numerical aperture, and PXP being the chip's pixel pitch, i.e. dPX.

In case the lateral shift DS achievable with a singular beam shifting device 150 is not sufficient, several beam shifting devices 150 can be combined so that the individual lateral shifts of individual beam shifting devices 150 accumulate. Therein, it is possible to place all beam shifting devices 150 in the same area, i.e. at one of the positions POS1, POS2, POS3, or different beam shaping devices are placed at different positions. Also different ones of the embodiments of the beam shifting devices 150 introduced above can be combined in one setup.

The solution suggested herein allows identification of physical features FEAT of the object 200 like edges, contour lines, irregularities etc. which extend at a surface of the object 200 in more than one dimension.

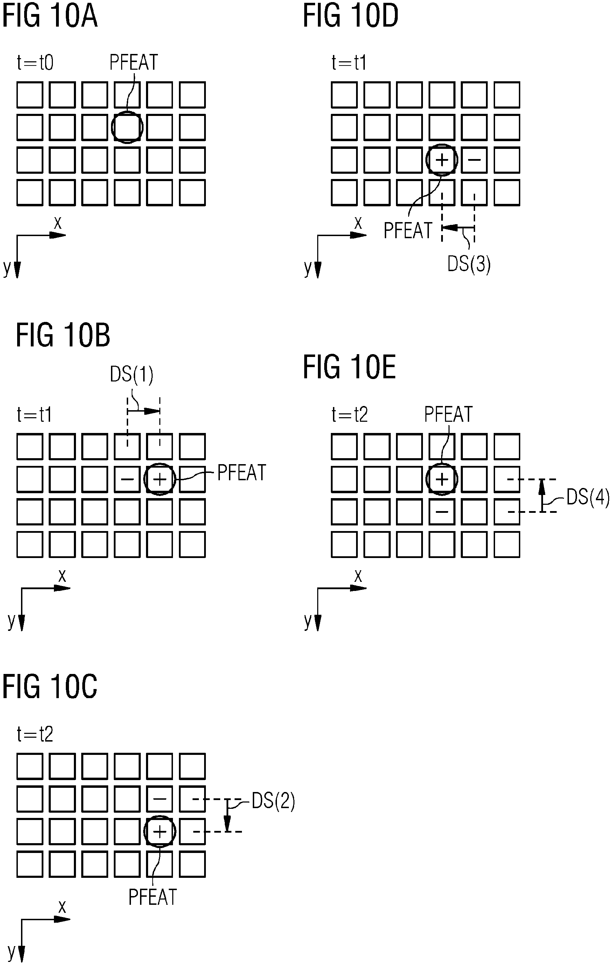

However, for the ease of explanation of the working principle of the solution, it is assumed in the context of FIG 10 that the feature FEAT of the object 200 is a punctiform structure so that the extensions of its projection PFEAT on the sensor chip 111 are not more than the extensions wPX of the sensor elements SE. Moreover, the feature FEAT shall be embodied such that its projection PFEAT has a significant contrast compared to its immediate surrounding in the overall projection P200. In other words, the projection PFEAT of the punctiform feature FEAT appears as a light spot in a dark surrounding or as a dark spot in a light surrounding. As indicated before, the extensions of the spot are not more than the extensions wPX of the sensor elements SE. FIGs 10a-10e show the position of the projection PFEAT on the sensor chip 111, indicated by a circle.

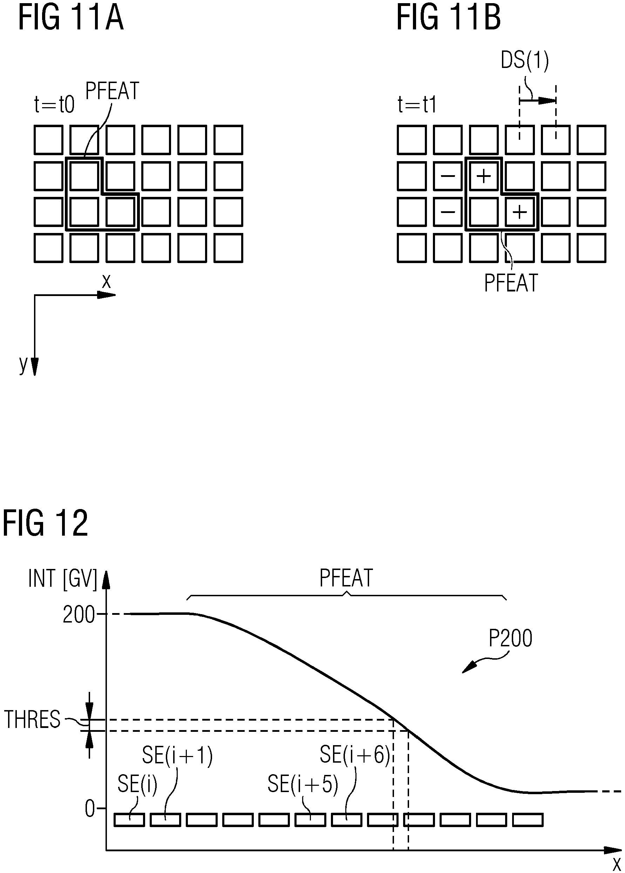

A positive event signal POS is indicated in FIGs 10a-10e as well as in later FIGs 11a-11b by a symbol "+", while a negative event signal NEG is indicated by a symbol "-". FIGs 10a-10e and 11a-11b assume that a positive event signal POS is generated when the projection PFEAT newly falls onto a sensor element SE, i.e. the projection PFEAT "enters" the sensor element, and that a negative event signal NEG is generated when the projection PFEAT leaves a sensor element SE. However, it can of course be vice versa. In any case, it can be assumed that in the shown scenario both a positive POS and a negative event NEG will occur each time such moving of the projection PFEAT from one sensor element to another happens.

FIGs 10a-10e show an embodiment of the working principle of the beam shifting device 150, assuming that a sequence SEQ of J=4 subsequent shifting steps SHS(j) with j=1,...,J is applied. At a point t0 in time, the beam shifting device 150 is not yet activated, i.e. no shifting is achieved. This situation of t0 is indicated in FIG 10a while FIGs 10b-10e show situations of subsequent points t1-t4 in time. Therein, FIGs 10a-10e show only a limited number of sensor elements SE of the sensor chip 111 for the sake of clarity.

Thus, FIG 10a represents the first point t0 in time before the beam shifting device 150 is activated. Typically, none of the sensor elements SE of the chip 111 generates an event signal SIG because the flux onto the sensor chip 111 does not change because the object 200 is not moving and the light flux applied by the illumination is assumed to be constant.

At a point t1 in time, a first shifting step SHS(1) is applied and the beam shifting device 150 shifts the light flux field LFL in positive x-direction, so that the projection PFEAT is shifted in the same direction by an amount DS(1) from one sensor element to its neighboring sensor element. This is shown in FIG 10b.

Again, the lateral shifting of the light path and, therewith, of the projection P200 of the object 200 onto the chip 111 achieves that the projection PFEAT of feature FEAT is shifted across the sensor chip 111 so that corresponding light fluxes FX onto the sensor elements SE change, resulting in respective event signals SIG=POS and/or SIG=NEG. Correspondingly, one sensor element SE(i) generates a positive event signal POS and the other one SE(i+1) generates a negative event signal NEG.

FIG 10c shows the situation at a point t2 in time. At this time t2, a second shifting step SHS(2) is applied and the beam shifting device 150 shifts the light flux field LFL in positive y-direction, so that the projection PFEAT is shifted in the same direction by an amount DS(2) from one sensor element to its neighboring sensor element. Again, a combination of a positive event POS and a negative event NEG is generated for neighboring sensor elements.

FIGs 10d and 10e show situations in points t3 and t4 in time at which a third and a fourth shifting step SHS(3), SHS(4) are applied and the beam shifting device 150 shifts the light flux field LFL and with it the projection PFEAT in negative x-direction and negative y-direction, respectively, by amounts DS(3), DS(4) so that corresponding positive and negative event signals are generated for the respective sensor elements which are entered and left by the projection PFEAT.

The sequence SEQ of shifting steps SHS(j) of FIGs 10a-10e with j=1,...,J and J=4 show the preferred setup with different shifting steps SHS(j1), SHS(j2) with j1≠j2 having different shifting directions, while the shifting amounts DS(j) of different shifting steps SHS(j1), SHS(j2) might be identical to each other. In the shown example, the shifting amount DS(j) correspond to the distances dPX between the centers of two neighboring sensor elements SE(i), SE(i+1), i.e. DS(j)=dPX. The application of different shifting directions, preferably but not necessarily along rows and columns of the sensor chip 111, allows 2-dimensional determination of features. Shifting along only one direction would mean that elements of features which extend along that shifting direction would not be detected.

In such a manner, a rectangular path can be realized as indicated in FIG 10 by a sequence SEQ comprising at least J=4 shifting steps SHS(1)-SHS(4), wherein SHS(1) is performed in a first shifting direction, e.g. in a positive x-direction, with a first shifting amount DS(1), SHS(2) is performed in a second shifting direction perpendicular to the first shifting direction, e.g. in a positive y-direction, with a second shifting amount DS(2), SHS(3) is performed in a third shifting direction opposite to the first shifting direction, e.g. in negative x-direction, with a third shifting amount DS(3)=DS(1), SHS(4) is performed in a fourth shifting direction opposite to the second shifting direction, e.g. in negative y-direction, with a fourth shifting amount DS(4)=DS(2). In case DS(3)=DS(1) and DS(4)=DS(2) is applicable, a rectangular path is achieved. Additional setting DS(1)=DS(2) results in a quadratic path. Of course the shifting amounts might be more than just one pixels distance dPX.

FIGs 11a-11b show a simpler embodiment of the working principle of the beam shifting device 150, wherein the sequence SEQ only comprises J=1 shifting steps SHS(1). Again, FIGs 11a-11b show only a limited number of sensor elements SE of the sensor chip 111 for the sake of clarity.

It is assumed that the feature FEAT is not only punctiform, but has a certain lateral extension so that its projection PFEAT on the sensor chip 111 is formed as indicated in FIGs 11a-11b, e.g. essentially like the letter "L". The feature FEAT shall again be embodied such that its projection PFEAT has a significant contrast compared to its immediate surrounding in the overall projection P200.

FIG 11a represents the first point t0 in time before the beam shifting device 150 is activated. Typically, none of the sensor elements SE of the chip 111 generates an event signal SIG because the flux onto the sensor chip 111 does not change because the object 200 is not moving and the light flux applied by the illumination can be assumed to be constant.

At a later point t1 in time, a shifting step SHS(1) is applied and the beam shifting device 150 shifts the light flux field LFL in positive x-direction, so that the projection PFEAT is shifted in the same direction by an amount DS(1). This is shown in FIG 11b. The lateral shifting of the light path and, therewith, of the projection P200 of the object 200 onto the chip 111 achieves that the projection PFEAT of feature FEAT of the object 200 is shifted as well so that corresponding light fluxes FX onto the sensor elements SE change, resulting in respective event signals SIG=POS and/or SIG=NEG. Correspondingly, some sensor elements SE(i) generate a positive event signal POS and other ones SE(i+1) generate a negative event signal NEG.

As can be seen from FIGs 10 and 11, the presence of a feature FEAT results in positive POS and negative event signals NEG when the light flux field LFL is laterally shifted. More specifically, the shifting results in combinations of positive POS and negative event signals NEG. Thus, detection of such combinations POS, NEG allows to conclude that a feature FEAT is present. Furthermore, the positions of positive and negative event signal SIG generating sensor elements SE relative to each other on the sensor chip 111 allows to derive the extension and dimension of the feature FEAT.

Furthermore, for the polarity of the events with respect to the shift direction, it can be inferred from the event data polarity, if the respective feature part is brighter and related with a higher light flux in its nature than the neighboring feature or if it is less bright or related with a lower light flux. Depending on the illumination scenario, if it is in transmitted light or reflected light or even dark field kind of settings in reflected or transmitted light, the light flux can be related to a relative transparency or reflectivity, respectively. Thus, the shift direction and event polarity created by the respective shifting action can be used to infer further object properties or characteristics.

In both embodiments of the working principle, the DVS camera 110 provides imaging data DAT(i) as introduced above to the evaluation unit 123 of the control system 120. Apart from the event signals SIG(i) themselves and the time stamps TS(i), the imaging data DAT(i) include the unambiguous identifiers ID(i) of the respective individual event signal SIG(i) generating sensor elements SE(i). These identifiers ID(i) allow in combination with the respective time stamps TS(i) conclusions regarding the position of the respective event signal SIG(i) generating sensor elements SE(i) on the sensor chip 111 for each point TS(i) in time as shown in FIGs 10, 11. With that information, the lateral extension of the projection PFEAT can be determined. This knowledge about the projection PFEAT allows to derive the extension and dimension of the physical feature FEAT because the imaging properties of the optics section 112 as well as the overall imaging modalities of the inspection system 100 can be assumed to be well known.

Preferably, the operation of the beam shifting device 150 and the reading out of event signals SIG(i) are well synchronized. In other words, a clock of the DVS camera 110 and a clock of the control unit 122 for controlling the beam shifting device 150 are well synchronized and use the same accurate time base.

Preferably and as indicated in FIGs 10a-10e, the beam shifting device 150 is embodied and operated to apply a sequence SEQ with J>1 shifting steps, wherein the respective shiftings are performed in two directions on the sensor chip 111, preferably perpendicular to each other. In the best mode, at least one shifting step is performed along the rows of sensor elements SE, i.e. in the x-direction, and at least one shifting step is performed along the columns of sensor elements SE, i.e. in the y-direction. Applying more than one shifting step in the sequence promises higher reliability of the conclusion that a feature FEAT is present, while the shifting of the light flux field LFL in two different directions allows better conclusions on the two dimensional extension of the feature FEAT.

The above exemplary explanations assume that the paths along which a point of the projection PFEAT, the whole projection PFEAT, and the overall projection P200 move might be a straight line or rectangular or even quadratic, preferably along rows and/or columns of the sensor chip 111. However, it would also be possible that the paths are ellipsoid or even circular. Moreover, above exemplary explanations introduce discrete shifting steps, e.g. SHS(j). However, the shifting can also be achieved in a continuous procedure. For example, the plate 151 in the first embodiment of the beam shifting device 150 might be tilted in a sinusoidal manner around the axis AXY as introduced in FIG 5 and, at the same time, around an axis AXX, so that the path on the sensor chip 111 becomes ellipsoid or even circular.

Thus, in both embodiments of the working principle, a physical feature FEAT of the object 200 can be identified by shifting the light flux field LFL and, therewith, the projection PFEAT of feature FEAT on the sensor chip 111. Correspondingly, identification of features FEAT like edges, contour lines, irregularities etc. becomes possible.

Preferably, the inspection system 100 includes an illumination system with one or more light sources 131, e.g. LEDs, wherein the illumination system and its one or more light sources 131 are configured and arranged such that they provide a preferably constant light flux onto the object 200 which is preferably homogenous over the entire field of view FOV. Since typical DVS cameras 110 are monochromatic, the illumination can be monochromatic too or it is a multicolor illumination, e.g. in the ultraviolet, short wavelength infrared, or in the visible spectrum. In general, the illumination is adapted to the spectral sensitivity range of the respective DVS camera and can therefore range from ultraviolet to visible to infrared including SWIR, NIR spectral ranges, i.e. from < 190 nm up to 2,5 µm. All known and typically applied illumination modalities can be used individually or in a combined manner, like bright field transmitted light, bright field reflected light, dark field reflected light or dark field transmitted light, as well as any kind of mixed forms or modalities. For example, different illumination methods might also apply different colors of light. For some inspections, even dark field kinds of illumination in the reflective or transmissive regime can be employed as well. Further contrasting methods like polarization might also be combined for the illumination. In the end, suitable illumination of the object 200 by the illumination system for better imaging might apply different setups. For example, the light sources 131 might apply illumination in different colors and/or might be arranged such that the object 200 is illuminated in a transmissive and/or in a reflective light setup.

In a transmissive light setup, which can be suitable in case the object 200 is at least semi-transparent, at least one of the light sources 131 of the illumination system and the DVS camera 110 might be arranged on different sides of the object 200, i.e. the object 200 is positioned between such light source 131 and the DVS camera 110.

A reflective light setup, in which the light source 131 of the illumination system and the DVS camera 110 are on the same side of the object 200, is applicable independently from transparency of the object 200.

In any case, illuminating the object 200 achieves that the light flux field LFL is emitted by the object 200 towards the DVS camera 110 which can then detect the light flux field LFL. Therein, ambient light might be sufficient to cause the light flux field LFL, but utilization of a dedicated illumination system is preferred because this allows generation of well defined, homogeneous illumination. In any case, in case of changes of the flux of the light flux field LFL, the DVS camera 110 generates an event signal SIG as described above.

Since DVS cameras 110 detect changes in the flux FX per sensor element SE and generate an event if the photocurrent rises or lowers by a pre-defined amount or more, they automatically adapt themselves to the actual irradiance level for each sensor element SE in the operating range of the DVS camera 110 with respect to speed given by the minimal read out time of the sensor elements's SE photocurrent and the maximum time for this evaluation. In concrete, but to be understood as an example, this might result in an effective dynamic range of more than 100dB or even 120dB and above, compared to about 40 to 50dB for standard CMOS or CCD cameras with full frame read out. This capability is a result of the DVS sensor chip's 111 intrinsic ability to adapt locally to the respective signal strengths so that it applies the full well capacity of a sensor element SE with different exposure times where the respective sensor element is monitoring for a change in light exposure. In effect this makes up the effective dynamic range of 100dB and above.

In principle, the usage of events instead of a broad range of values representing fluxes or similar acts as a first kind of data or event filter to reduce the amount of measured data right at the source, i.e. at the imaging system itself. In a very broad and general perspective, the approach based on usage of a DVS camera 110 helps to directly reduce the data created to the relevant portion without long chains of image processing and thus also to improve the inspection system 100 performance with respect to sustainability aspects like energy consumption, materials involved due to less powerful computing and data transmission systems, and overall ICT infrastructure and also related carbon footprint. Despite these optimizations, the core of the inspection in finding potential defect sites is much more efficient and detailed than by employing conventional cameras.

From a data point of view and independent from the concrete embodiment of the object 200 and independent from the scenario, the amount of data created from the inspection system 100 with a DVS camera 110 is decreased significantly as compared to a conventional camera, since all regions of the object 200 without relevant features FEAT do not create an event signal because the changes in light flux of the respective illumination modalities do not exceed the pre-defined threshold THRES.

Thus, the solution allows to utilize the advantages of the DVS camera, e.g. speed, high dynamic range, and data volume reduced to the minimum, to generate an image of the object which depicts the features FEAT of the object, being edges or contour lines etc., i.e. intrinsic object features, and/or irregularities. The invention can be performed with objects at rest or moving relative to the camera.

The DVS camera 110 with beam shifting device 150 can also be used in an interpolation mode for precise dimensional measurements of this camera setup, when the timing information of the beam shifting device 150 and the DVS camera 110 gets exploited. When the trajectory of the beam shifting, i.e. the path of the projection PFEAT on the sensor chip 111 caused by the shifting procedure described above, is known, each event signal SIG(i) can be attributed to a specific phase of the repetitive beam shifting pattern. Thus, the shifting effect introduced by the beam shifting device 150 can be compensated for by evaluating the temporal and spatial event signal pattern including the event signal type, i.e. "POS" or "NEG", and the event threshold. By interpolating the event steps in the time series of event signals SIG(i) from one sensor element SE(i) or the group of sensor elements SE covered by the beam shifting, a spatial-temporal pattern can be deduced. The position of intensity maxima, minima, or maximum slope for a rising or falling signal can be determined from this spatial temporal pattern and assigned to one reference point of time for the shifting path, e.g. for T0 of the deflection path, where no deflection happens. When all the lateral positions POS(i) of the events SIG(i) get assigned with respect to T0, they get referenced to the same point in time and, thus, pixel pattern position. Due to the timing information and higher temporal resolution, the feature points like maxima, minima, or points of maximal slope of the light intensity can be assigned with sub-pixel accuracy and thus the beam shifting technology for the DVS camera 110 allows to increase the physical resolution of the DVS camera sensor 111 based on the timing information for the event signals and the known trajectory of the shifting.

This is illustrated in FIG 12, which shows a more realistic intensity INT distribution along the x-direction of the projection P200 of the object 200 falling onto the sensor chip 111 and its sensor elements SE. P200 includes the projection PFEAT which is assumed to correspond to an edge like feature FEAT extending at the object 200 along the y-direction. Actually, FIG 12 shows a profile of the projection PFEAT. Although the edge FEAT itself might be a sharp structure, the corresponding projection PFEAT will not include a discrete transition from high to low intensity, but it will be characterized by a certain blurriness and a continuous transition with a certain slope. The form of the transition is characteristic for the feature FEAT and, at the same time, depends on the optical imaging properties of the inspection system 100, i.e. of the DVS camera 110, the optics section 112, the beam shifting device 150 and other components of the inspection system 100 which influence the procedure of projection the object 200 onto sensor chip 111. However, those optical properties can be assumed to be well known so that it is possible to derive the real physical form of a feature FEAT, i.e. its dimensions and extension, from the projection PFEAT.

Just as an example, it might be assumed that the high intensity region corresponds to two hundred grey values (INT=200GV) and the low intensity region corresponds to ten grey values (INT=10GV), wherein the grey values GV represent the respective intensities INT, and it might be assumed that the blurry transition region extends in the x-direction across, just for example, ten micrometers. Assuming moreover that the individual sensor elements SE extend across one micrometer, i.e. dPX=1µm, it becomes clear that the projection PFEAT will extend across several sensor elements SE, as shown in FIG 12. Moreover, it becomes clear that shifting the feature PFEAT across one particular sensor element SE(i1) of the sensor chip 111 results in that this particular sensor element SE(i1) will generate a sequence or time series of event signals SIG(i1) according to the intensity slope. Assuming again that the threshold THRES is chosen to be 15% and starting with an intensitiy INT=10GV and corresponding flux FX, it becomes clear that a plurality of event signals SIG(i1) with corresponding time stamps TS(i1) is generated by the particular sensor element SE(i1) during shifting.

The interpolation mode foresees that an additional information is collected besides SIG(i1), ID(i1), and TS(i1) in case an event signal SIG(i1) is generated for a particular sensor element SE(i1). In concrete, in such a case the photo current or any other measure INT(i1) representing the momentary light intensity onto the particular sensor element SE(i1) is measured. Thus, the plurality of event signals SIG(i1) of the sequence or time series resulting from the relatively blurry projection PFEAT being shifted across a particular sensor element SE(i1) as explained above is enriched with the corresponding intensity measures INT(i1) which can be assigned to the corresponding time stamps TS(i1) to form data points [INT(i1), TS(i1)]. The resulting temporal behavior INT(i1)(TS(i1)) of the intensities INT(i1), described by those discrete data points [INT(i1), TS(i1)], is a profile PROF of the projection PFEAT, i.e. it represents the projection PFEAT, from which the real physical form of a feature FEAT can be reproduced based on the knowledge about the optical imaging properties of the inspection system 100. An even better reproduction of the real physical form of a feature FEAT is possible by using the discrete data points [INT(i1), TS(i1)] as input data for an interpolation of the projection PFEAT so that a sub-pixel resolution can be achieved. Thus, the time development INT(i1)(TS(i1)), which consists of a plurality of data points [INT(i1), TS(i1)] according to the plurality of generated event signals SIG(i1), can be interpolated to form the profile PROF from which the physical form of a feature FEAT is reproduced. As described above, the real form of the feature FEAT can be derived from the projection PFEAT, i.e. from the temporal behavior INT(i) (TS(i)) of the intensities INT(i).

Since the measures INT(i), e.g. photo currents, are only determined and transmitted to the control system 120 in case an event signal SIG is generated, the amount of data to be processed is still very limited compared to a conventional camera system.

Thus, all embodiments, realization forms, and approaches have in common that a known shifting DS of an image or projection, respectively, of the object on the DVS camera's sensor chip is achieved and that the resulting pattern or shifting path is evaluated to determine spatial, e.g. geometric and/or dimensional properties of the object and its features.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description. Thus, the invention is not restricted to the above illustrated embodiments, but variations can be derived by a person skilled in the art without deviation from the scope of the invention.

### Reference numerals

- 10: production facility
- 11: first station
- 12: second station
- 13: conveyor belt
- 100: inspection system
- 110: DVS camera
- 111: sensor chip
- 111p: surface
- 112: optics section
- 112': optical devices
- 113: body
- 114: opening
- 120: control system
- 121: wired or non-wired connection
- 122: control unit
- 123: evaluation unit
- 124: memory
- 125: processor
- 131: light source
- 150: beam shifting device
- 151: plano-parallel, transparent plate
- 151s1, 151s2: surfaces
- 152: mirror
- 153: plate
- 154: surfaces, electrodes
- 200: object
- AXY: axis
- dPXx, dPXy: pixel x-/y-distance
- DS: shifting amount
- DSx(LFL): lateral shift
- FEAT: Feature of object
- FOV: Field of view
- LFL: light flux field
- P200, PFEAT: projections
- SE(i): sensor elements
- wPXx, wPXy: pixel width / height
- "+", "-": positive /negative event signal

## Claims

1. Method METH for camera based imaging of an object (200) for observing a physical feature FEAT of the object (200),
- wherein the camera (110) is a DVS camera (110)
-- comprising a light sensitive sensor chip (111) with a plurality of sensor elements SE(i) and
-- being configured to generate for each sensor element SE(i) individually imaging data DAT(i) including an event signal SIG(i) in case a light flux FX onto the respective sensor element SE(i) changes by more than a given threshold THRES, and
- wherein the object (200) is positioned in a field of view FOV of the DVS camera (110) such that a projection P200 of the object (200), which includes a projection PFEAT of the feature FEAT, falls onto the sensor chip (111) of the DVS camera (110),
and wherein
- the method METH comprises a stage INSPECT of observing the object (200) with the DVS camera (110) to generate imaging data DAT(i) representing the feature FEAT, wherein a relative lateral shifting of the projection PFEAT of the feature FEAT and the sensor chip (111) is executed during the stage INSPECT by means of a beam shifting device (150).

2. Method according to claim 1, wherein the lateral shifting is executed such that the projection PFEAT moves across the sensor chip (111) along a rectangular, preferably quadratic, path or along an ellipsoid, preferably circular, path.

3. Method according to any one of claims 1 to 2, wherein the lateral shifting is embodied as a sequence SEQ of one or more subsequent shifting steps SHS(j) with j=1,...,J and J≥1 representing the number of shifting steps SHS(j) of the sequence SEQ, wherein each one of the shifting steps SHS(j) is **characterized by** a given shifting amount and a given shifting direction.

4. Method according to any one of claims 1 to 3, wherein the lateral shifting of the projection PFEAT of feature FEAT across the sensor chip (111) is performed by lateral shifting a light flux field LFL, which is emitted by the object (200) towards the DVS camera (110), relative to the sensor chip (111) with the help of the beam shifting device (150).

5. Method according to any one of claims 1 to 4, wherein the lateral shifting of the projection PFEAT of feature FEAT across the sensor chip (111) is performed by lateral shifting of the sensor chip (111) relative to a light flux field LFL emitted by the object (200) towards the DVS camera (110).

6. Method according to any one of claims 1 to 5, wherein the DVS camera (110) comprises an optics section (112) with one or more integrated optical devices (112') for generating the projection P200 of the object (200) from the light flux field LFL emitted by the object (200), wherein the beam shifting device (150) is realized by at least one of the optical devices (112') of the optics section (112), wherein the lateral shifting is achieved by changing optical properties of the at least one optical device (112'), preferably by shifting, tilting, and/or deforming the at least one optical device (112').

7. Method according to any one of claims 1 to 5, wherein the beam shifting device (150) is embodied as a transparent, plano-parallel plate (151), which has two parallel surfaces (151s1, 151s2) and which is positioned in a z-direction between the object (200) and the sensor chip (111), so that the light flux field LFL emitted by the object (200) passes through the parallel surfaces (151s1, 151s2) and through the inner of the plate (151) to reach the sensor chip (111), wherein the lateral shifting is achieved by tilting the plate (151) around the x-direction and/or around the y-direction.

8. Method according to any one of claims 1 to 5, wherein the beam shifting device (150) is embodied as a pair of mirrors (152) which are arranged parallel to each other and, in a default position, under an angle of essentially 45° with regard to the z-direction, such that the light flux field LFL emitted by the object (200) is reflected by a first one of the mirrors (152) to the second one of the mirrors (152) and from the second one of the mirrors (152) towards the sensor chip (111), wherein the lateral shifting is achieved by tilting both mirrors by equal angels ALPHA around the x-direction and/or around the y-direction relative to the default position.

9. Method according to any one of claims 1 to 5, wherein the beam shifting device (150) is embodied as an electro-optical device which has a plate (153) with two surfaces (154) and which is positioned in a z-direction between the object (200) and the sensor chip (111), so that the light flux field LFL emitted by the object (200) passes through the surfaces (154) and through the inner of the plate (153) to reach the sensor chip (111), wherein the lateral shifting is achieved by applying a voltage at preferably transparent electrodes arranged at the surfaces (154).

10. Method according to any one of claims 1 to 9, wherein the method METH comprises a stage EVAL of evaluating the generated imaging data DAT(i), wherein properties of the physical feature FEAT of the object (200) are derived from the generated imaging data DAT(i), which include the event signal SIG(i) itself, a time stamp TS(i) representing the point TS(i) in time at which an event signal SIG(i) is generated for a particular sensor element SE(i), and an identifier ID(i) of the particular sensor element SE(i) representing a position of the particular sensor element SE(i) on the sensor chip (111), wherein, for at least one of the points TS(i) in time, positions POS(i) of those sensor elements SE(i), for which event signals SIG(i) are generated at the respective point TS(i) in time, are processed in combination with the event signal types of the respective event signals SIG(i) to determine the properties of the feature FEAT.

11. Method according to any one of claims 1 to 10, wherein the imaging data DAT(i) furthermore comprise a measure INT(i) representing a momentary light intensity of the light flux field LFL onto the respective sensor element SE(i), wherein, in case a time series with a plurality of subsequent event signals SIG(i1) and, correspondingly, imaging data DAT(i1) appears for a particular sensor element SE(i1),
- the time series is evaluated by determining the time development INT(i1)(TS(i1)) of the measures INT(i1) of the imaging data DAT(i1) of the time series based on the time stamps TS(i1) of the imaging data DAT(i1), wherein the determined time development INT(i1)(TS(i1)) represents a profile PROF of the projection PFEAT,
- a physical form of a feature FEAT is reproduced from the profile INT(i1) (TS(i1)).

12. Method according to claim 11, wherein the time development INT(i1)(TS(i1)), which consists of a plurality of data points [INT(i1), TS(i1)] according to the plurality of generated event signals SIG(i1), is interpolated to form the profile PROF from which the physical form of a feature FEAT is reproduced.

13. System (100) for camera (110) based imaging of an object (200) for observing a physical feature FEAT of the object (200), comprising a camera (110) and a control system (120) configured to execute a method according to any one of claims 1 to 12,
wherein the camera (110) is a DVS camera (110)
- comprising a light sensitive sensor chip (111) with a plurality of sensor elements SE(i) and
- being configured to generate for each sensor element SE(i) individually imaging data DAT(i) including an event signal SIG(i) in case a light flux FX onto the respective sensor element SE(i) changes by more than a given threshold THRES, and
- comprising an optics section (112) for generating a projection P200 of the object (200) onto the sensor chip (111) from a light flux field LFL emitted by the object (200), wherein the projection P200 includes a projection PFEAT of the feature FEAT,
and wherein
- the system (100) furthermore comprises a beam shifting device (150) configured and operable to laterally shift the projection PFEAT of the feature FEAT across the sensor chip (111) by a predetermined amount DS.

14. System (100) according to claim 13, wherein the beam shifting device (150) is placed
- in a first position POS1, such that it is located between the optics section (112) and the sensor chip (111) of the DVS camera (110), or
- in a second position POS2, such that the optics section (112) of the DVS camera (110) is located between the beam shifting device (150) and the sensor chip (111), or
- in a third position POS3, such that it is placed within the optics section (112).

15. System (100) according to claim 14, wherein the beam shifting device (150) is placed in the third position POS3, wherein integrated optical devices (112') of the optics section (112) are arranged and controllable such that they form the beam shifting device (150).

16. System (100) according to claim 14, wherein the beam shifting device (150) is placed in the first position POS1 and wherein the DVS camera (110) comprises a body (113), wherein the sensor chip (111) and the beam shifting device are placed within the body (113) of the DVS camera (110).

17. System (100) according to any one of claims 13 to 16, wherein the beam shifting device (150) is embodied as a transparent, plano-parallel plate (151), which has two parallel surfaces (151s1, 151s2) and which is positioned in a z-direction between the object (200) and the sensor chip (111), so that the light flux field LFL emitted by the object (200) passes through the parallel surfaces (151s1, 151s2) and through the inner of the plate (151) to reach the sensor chip (111), wherein the lateral shifting is achieved by tilting the plate (151) around the x-direction and/or around the y-direction.

18. System (100) according to any one of claims 13 to 16, wherein the optics section (112) comprises one or more integrated optical devices (112') for generating the projection P200 of the object (200) from the light flux field LFL, wherein the beam shifting device (150) is realized by at least one of the optical devices (112') of the optics section (112), wherein the lateral shifting is achieved by changing the optical properties of the at least one optical device (112'), preferably by shifting, tilting, and/or deforming the at least one optical device (112').

19. System (100) according to any one of claims 13 to 16, wherein the beam shifting device (150) comprises a pair of mirrors (152) which are arranged parallel to each other and, in a default position, under an angle of essentially 45° with regard to the z-direction, such that the light flux field LFL emitted by the object (200) is reflected by a first one of the mirrors (152) to the second one of the mirrors (152) and from the second one of the mirrors (152) towards the sensor chip (111), wherein the lateral shifting is achieved by tilting both mirrors (152) by equal angels ALPHA around the x-direction and/or around the y-direction relative to the default position.

20. System (100) according to any one of claims 13 to 16, wherein the beam shifting device (150) is embodied as an electro-optical device which has a plate (153) with two surfaces (154) and which is positioned in a z-direction between the object (200) and the sensor chip (111), so that the light flux field LFL emitted by the object (200) passes through the surfaces (154) and through the inner of the plate (153) to reach the sensor chip (111), wherein the lateral shifting is achieved by applying an electrical voltage at preferably transparent electrodes arranged at the surfaces (154).
